# EUROPEAN PATENT APPLICATION

(11) **EP 4 418 116 A1**
(43) Date of publication of application: **21.08.2024**
(21) Application number: 23157091.2
(22) Date of filing: 16.02.2023
(51) Int. Cl.: G06F 9/455, G06F 21/50

(54) **METHOD FOR ACCESSING A RESOURCE OF A CONTROL UNIT AND CONTROL UNIT**

(71) Applicant: OpenSynergy GmbH, 10245 Berlin (DE)
(72) Inventor: MÖLL, Matti, 10439 BERLIN (DE); YAKUVLEV, Anton, 12524 BERLIN (DE)
(74) Representative: Bardehle Pagenberg Partnerschaft mbB Patentanwälte Rechtsanwälte

(57) **Abstract**

According to the invention a method is provided for accessing a resource of a control unit comprising:
executing a virtualization system on at least one processor of the control unit, the virtualization system including an interpreter (28) for bytecode and/or a script, the virtualization system assigning processor time and memory space to at least one guest system;
executing a first guest system (24) running on the virtualization system;
emitting, by the first guest system (24), an access request (38) to access a resource (5, 7, 32) of the control unit to the virtualization system (22);
determining, by the virtualization system (22), that the access request is not allowable for the first guest system (24);
loading by the interpreter (28) bytecode instructions and/or script instructions based on the request of the first guest system (24); and
executing, by the interpreter (28), the loaded bytecode or script instructions to access the resource (5, 7, 32).

## Description

The present invention concerns method for accessing a resource of a control unit.

Further, the present invention relates to a control unit comprising at least one processing connected to at least one memory.

In the recent years virtual machine implementations have been enhanced to execute untrusted code in elevated privilege levels inside the Linux operating system kernel.

A hypervisor for safety critical purposes is only as safe as the least safe component within it. For safety reasons the amount of code and functionality must be limited to the bare minimum possible. For performance reasons it can be necessary to move more functionality into the hypervisor itself which contradicts the previous requirement.

Further, known solutions directly implement load/store emulation in machine code and require to have native code to execute device specific emulation functionality.

Object of the invention is to provide a method and a control unit, which provides an increased safety by keeping a high functionality.

According to one aspect, a method is provided for accessing a resource of a control unit comprising:
executing a virtualization system on at least one processor of the control unit, the virtualization system including an interpreter for bytecode and/or a script, the virtualization system assigning processor time and memory space to at least one guest system;
executing a first guest system running on the virtualization system;
emitting, by the first guest system, an access request to access a resource of the control unit to the virtualization system;
determining, by the virtualization system, that the access request is not allowable for the first guest system;
loading by the interpreter bytecode instructions and/or script instructions based on the request of the first guest system; and
executing, by the interpreter, the loaded bytecode or script instructions to access the resource.

Further embodiments may relate to one or more of the following features, which may be combined in any technical feasible combination:
- the virtualization system is statically configured;
- the resource of the control unit is the at least one processor, at least one memory, at least one hardware controller, at least one register of the at least one processor, at least one register of the at least one hardware controller and/or one or more memories inside the at least one processor.

- the access request a write instruction, a read instruction, a load instruction, a store instruction, a system call, and/or an instruction for the resource;
- the loaded bytecode instructions and/or script instructions are selected depending on the access request;
- the interpreter has not a Turing complete instruction set;
- the interpreter has an instruction set, wherein the instruction set consists of arithmetic operations, load and store operations, signaling and conditional branch instructions;
- the interpreter has an instruction set, wherein the instruction set does not allow backward jumps, loops, and/or a recursive program flow;
- the access request includes a control command to control a device, wherein the bytecode and/or script instructions include commands to access the resource based on the access request of the first guest system, wherein, in particular, the bytecode and/or script instructions include code transforming the control commands from the first guest system to a coded instruction or configuration for the device, and, in particular, to write or store the coded instruction or configuration into the resource.
- the device is a device of a vehicle, in particular an automotive vehicle, wherein the device is one or more illuminating devices like lamps, one or more motors, one or more locks, one or more relays, one or more windows and/or the like;
- the bytecode and/or script instructions include commands issues a request to the virtualization system that a second guest system should be executed and/or should read the coded instruction or configuration from the resource, wherein the second guest system is adapted access the device and/or a hardware controller of the device, the method further comprising:
   executing the second guest system on the virtualization system, reading, by the second guest system, the coded instruction or the configuration of the device from the resource based on the obtained signal, and
   processing, by the second guest system the configuration of the device;
- the bytecode and/or script instructions are loaded by the virtualization system as part of the configuration of the virtualization system; and/or
   the interpreter (28) provides a virtual processor on which the byte code and/or script instructions are executed.

According to another aspect, a control unit is provided comprising
at least one processor connected to at least one memory;
a virtualization system executing on the at least one processor of the control unit, the virtualization system including an interpreter for bytecode and/or a script, the virtualization system assigning processor time and memory space to at least one guest system;
a first guest system running on the virtualization system, wherein the first guest system is adapted to emit an access request to access a resource of the control unit to the virtualization system,
wherein the virtualization system is adapted to determine that the access request is not allowable for the first guest system, wherein the interpreter is adapted to load bytecode and/or script instructions based on the request of the first guest system and to execute the loaded bytecode and/or script instructions.

Further embodiments may relate to one or more of the following features, which may be combined in any technical feasible combination:
the controller is adapted to perform the method according to an embodiment disclosed herein.

According to a further aspect, a computer program product is provided comprising instructions, when the program is executed by a processor, cause the processor to carry out the method of one of the preceding steps. According to an embodiment a computer program product may be a physical software product, for example a hard disc, a solid state disc, a CD-ROM, a DVD, comprising the program.

According to another aspect, a data carrier signal carrying the computer program product according to an embodiment disclosed herein is provided.

According to other aspects, the present invention relates to computer-readable nonvolatile storage medium, for example a hard disc, a solid state device, a CD-ROM, a DVD, including a program containing commands for executing the method according an embodiment disclosed herein, when loaded and executed on a processor.

Further advantages, features, aspects and details are evident from the dependent claims, the description and the drawings.

So that the manner in which the above recited features of the present invention can be understood in detail, a more particular description of the invention, briefly summarized above, may be read by reference to embodiments. It is to be noted, however, that the appended drawings illustrate only typical embodiments of this invention and are therefore not to be considered limiting of its scope, for the invention may admit to other equally effective embodiments.
Fig. 1 shows schematically the hardware of an electronic control unit (ECU);
Fig. 2 shows schematically a system according to an embodiment; and
Fig. 3 shows schematically a flow chart according to an embodiment.

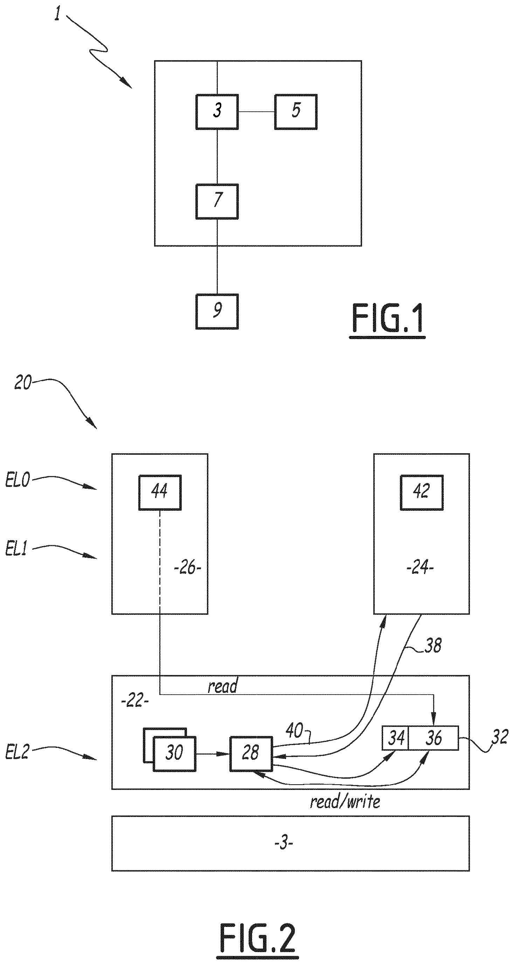

Figure 1 shows schematically an electronic control unit (ECU) 1. The ECU 1 might be also called control unit in the present patent application. For example, the ECU 1 is realized as a system on chip (SoC). According to an embodiment, an ECU comprises one or more processors 3 connected to one or more memories 5. The or each processor 3 may includes one or more cores. For example, the processor 3 comprises at least 1, 2, 3, 4, 5, 6, 7, 8 or more cores. Typically, the each core is an independent processing unit, independent from the other cores.

Further, the ECU 1 may comprise one or more hardware controller 7 for having access to an external device and/or networks 9.

In an example, the ECU 1 may comprise an interface for connecting to one or more bus systems, for example one or more hardware controller 7 for controller area network (CAN) busses and/or one or more hardware controller 7 for FlexRay busses. The ECU may also comprise further hardware controller for connecting to one or more wired or wireless connecting means, for example a Bluetooth connection, an Ethernet connection and/or to a USB (Universal Serial Bus) connecting means.

In some embodiments, the ECU is connected via one or more hardware controller 7 to devices, for example one or more illuminating devices like lamps, one or more motors, one or more locks, one or more relays, one or more windows and the like.

Usually, an automotive vehicle comprises a plurality of electronic control units (ECU), which may be assigned to different units of the vehicle, for example the steering wheel, the brakes, the windows, the motor etc. For example, the ECU may be connected to some sensors or drivers via a hardware controller 7, for example to drive the window, or to sense the angulation of the steering wheel, the level of oil or water in the motor. These ECUs may be connected to one or more displays via one or more display ports.

Further, to ECU may be connected to an input device, for example a keyboard, one or more buttons, or the like via a hardware controller 7.

According to an embodiment, the ECU 1 is provided as an embedded system in a vehicle.

Figure 2 shows schematically a system 20 according to an embodiment. The system 20 includes a virtualization system 22, running on the at least one processor or CPU (central processing unit) 3, and a plurality of virtual machines 24, 26 or guest systems, for example guest operating systems, each running in a separate partition. The guest systems 24, 26 are running on the virtualization system 22, for example a hypervisor, on the at least one processor 3 of the ECU 1. In other words, the virtualization system 22 enables several guest systems to simultaneously run on the one or more processors 3. The number of guest machines is not limited to two guest systems 24, 26, the system may include even less or more virtual machines, for example three, four, five, six, seven, or more guest systems. According to an embodiment, the virtualization system simulates the at least one processor 3 for each of the guest systems 22, 24.

The virtualization system 22 is adapted to assign the hardware resources to the respective guest systems and to provide, if necessary, inter partition communication (IPC) links between the different guest systems 22, 24.

In case of usage of three processor privilege levels of a respective processor (also called three stage virtualization or 3-tier architecture), the virtualization system 22 has the highest processor privilege level or exception level EL2, the partitions and the operating systems or guest systems 24, 26 running in the partitions have the second processor privilege level or exception level EL1, and the applications running on the operating systems or guest systems in the partitions have the lowest processor privilege level or exception level EL1. The privilege level EL0 is the lowest privilege level. The lowest privilege level is used for application running on operating systems being itself in the privilege level EL1. The access to the processor and/or to the memory resources depends on the privilege level.

The higher the privilege level the more extensive access to the resources of the control unit the process running in that privilege have. The highest processor privilege level allows the most extensive access to the resources of the control unit, in particular the processor and/or the memory. For example, processes running in the privilege level EL0, like applications, have only access to user registers, whereas programs running in privilege level EL1, for example an operating system, have access to user register and control registers.

The resources of the control unit 1 are for example the at least one processor 5, the at least one memory 5 and the at least one hardware controller 7. The resources may include registers of the at least one processor 5, registers of the at least one hardware controller 7 and/or one or more memories inside the at least one processor 5.

According to embodiments, the virtualization system is statically configured. Statically configured is a program module, for example the virtualization system 22, that is not changed during runtime.

In an embodiment, which may be combined with other embodiments disclosed herein, the virtualization system 22 is qualified for safety. In some examples, the guest systems 24, 26 are qualified for safety.

Qualified for safety means that the guest system conforms to a standard for safety critical systems, which, in particular, defines how the systems should be developed, tested, and/or documented. For example ISO 26262 is such a standard of the international organization for standardization, in particular the version published in 2011, 2012 and 2018. This standard defines includes for example safety requirements in the scope of the vehicle, safety analysis in the scope of the device to be performed before the development starts, safety requirements in the scope of the device, derived from the safety analysis, the development process: conforming to (A)SPICE standard, the tests (quality and quantity), the process documentation and provisions of a safety manual (which tells how to use a product in order to support safety properties).

In an embodiment, the virtualization system 22 includes an interpreter 28, in particular a bytecode and/or script interpreter. An interpreter is a module that directly executes instructions written in a programming or scripting language, for example the bytecode and/or a script, without requiring the previously to have been compiled into a machine language program. In other words, the interpreter provides an execution environment for byte code and/or a script.

The interpreter 28 is running in the same privilege level as the virtualization system 22.

The interpreter 28 is emulating a processor. In other words, the interpreter 28 is simulating at least one processor on which requests originating from a guest system should be executed. For example, requests are access requests to the one or more resources of the control unit. In embodiments, the one or more access requests are in particular load and/or store instructions to registers and/or to a memory, software exceptions, for example syscalls (system calls), read and/or write instructions, and/or instructions for the resource. For example, the instructions for the resource is a control command.

For executing these access requests, there are provided instructions in a bytecode and/or a script, for example in form of a program 30. A script contains instructions written in text form.

In particular, the interpreter 28 has a reduced instruction set for the execution of the program 30. The instructions set of the interpreter is for example a non-Turing complete instruction set. For example, the interpreter 28 does not allow bytecode instructions and/or script instructions to execute loops or backward jumps.

In an embodiment, the interpreter 28 has a limited instruction set comprising, in particular consisting of, forward jumps, arithmetic operations, load and store operations, signaling and conditional branch instructions. In an embodiment, the interpreter 28 has a limited instructions set that does not have instructions that permit to create recursive program flow. In an example of the instruction set, only branching to a higher program counter would be allowed. According to embodiments, the code provided to the interpreter 28 is only executed once with a program 30 including bytecode instructions and/or script instructions. However, a program 30 can be executed several times if an event triggering the execution of the program 30 occurs several times.

In other words, from the lengths of the program 30 including the bytecode instructions and/or script instructions the execution time can be determined. Further, it is clear that the program 30 will be terminated.

The bytecode instructions and/or script instructions to be executed by the interpreter 28 are stored, for example in form of one or more programs 30, in the virtualization system and are loaded as a configuration of the virtualization system 22 on startup or booting of the virtualization system 22. In other words, the bytecode instructions and/or script instructions, in particular in form of the programs 30, are not amended during runtime.

According to embodiments, the interpreter 28 is adapted and allowed to access, for example to read from and/or write to, a resource, in particular the processor, the memory, registers and/or the hardware controller 7.

According to embodiments, the bytecode instructions and/or script instructions include commands to access the one or more resources, in particular based on the access requests.

An example of a memory is the shared memory space 32.

According to an embodiment, the interpreter 28 is adapted to write and/or read to a shared memory space 32.

The shared memory space includes a first data memory portion 34 and a second data memory portion 36. The first and second data memory portions 34, 36 are provided for example in form of registers.

In an embodiment, the virtualization system 22 is adapted to only allow the second guest system 26 and the and the interpreter 28 to access at least one portion of the one or more resources, for example the shared memory space 32 and/or to prohibit the first guest system 24 direct access to the at least one portion of the one or more resources, for example the shared memory space 32. For example, the virtualization system 22 is adapted to program a memory management unit of the processor 3 to only allow the second guest system 26 and the and the interpreter 28 to access the at least one portion the one or more resources, in particular the shared memory space 32 and/or to prohibit the first guest system 24 to directly access the at least one portion the one or more resources, in particular the shared memory space 32.

According to embodiments, the interpreter 28 is provided to signal a guest system, for example, the second guest system 26, that it should read the data memory portions 36 and/or execute a particular application 44 that reads the data memory portion 36. For example, the interpreter 28 issues a request to the virtualization system 22 that the second guest system 26 should be executed, for example, in order to read the respective memory portion 34, 36. For example, the virtualization system 22 injects then an interrupt into the second guest system 26 for that purpose.

The virtualization system 22 is adapted to intercept access requests provided by the first guest system 24, for example unallowed or prohibited access requests . For example, an unallowed access request may be a request to access at least one portion of a resource of the control unit 1, see reference sign 38, in particular a load or store instruction.

In an embodiment, the access request includes a control command for the resource. For example, the control command relates to a configuration of a device controlled by the resource.

In a specific example, the first guest system 24, for example an application 42 of the first guest system 24, would like to write into a specific register, which is provided via an exception to the virtualization system 22. For example, this register may be outside a memory range allowed for the first guest system 24 and is therefore an unallowed exception.

The virtualization system 22 is further adapted to start the interpreter 28 with bytecode instructions and/or script instructions based on the intercepted or unallowed exception including the access request to a resource of the control unit 1. For example, the bytecode instructions and/or script instructions may depend on the intercepted request 38. In other words, in case several programs 30 are provided, the program 30 to be loaded by the interpreter 28 depends on the access request to the resource of the control unit 1 and/or is selected pending on the access request 38.

According to embodiments, the bytecode and/or script instructions use the request to access a resource of the control unit as a parameter, for example at least partially or completely.

In some example, which may be combined with other embodiments disclosed herein, the bytecode and/or script instructions are adapted to transform a memory access or the access request to access a resource into a defined write command for the resource, for example the shared memory space 32, in particular the data memory portion 34, 36.

In an embodiment, the bytecode instructions and/or script instructions may add additional information to the access request. Additionally or alternatively, the bytecode and/or script instructions may include code to transform control commands within the access request to a coded instruction or configuration.

As written here-above, after the termination of the execution of the bytecode and/or script instructions, for example in form of the program 30, by the interpreter 28, the interpreter 28, in particular via the virtualization system 22, informs, see reference sign 40, the first guest system 24 that the access request to access a resource has been executed.

Further, as indicated above, the virtualization system 22, after reception of the access request by the interpreter 28, is optionally adapted to switch to the second guest system 26 and injects an interrupt into the second guest system 26, so that the second guest system 26 reads a memory portion 34, 36 of the shared memory space 32 and/or is informed that the interpreter 28 has terminated a program 30. In other words, the second guest system 26 reads the same portion of the resource, for example the memory or the shared memory space 32, that has been written previously by the interpreter 28.

The second guest system then reads the shared memory space 32 and processes the stored information in the data memory portion 36. For example, the second guest system 26 executes a device functionality based on the read data memory portion 36, which in particular contains the coded instruction or configuration.

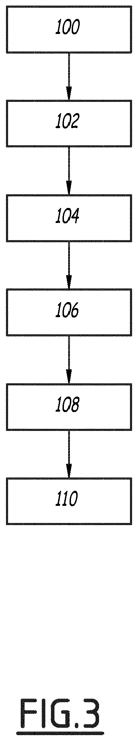

In the following, the functioning of the system will be explained with reference to Figure 3.

In a first step, see box 100, the first guest system 24, in particular an application 42 running in the first guest system 24, issues an access request to access a resource of the control unit to the virtualization system 22. For example, the access request to access a resource may be a request to access a memory section, for example of the memory 5 and/or the data memory portion 36. In a specific example, the guest system 24 request to access a predefined register. In an embodiment, the access request includes information to be provided to the resource, for example a control command, in particular in order to control a device.

According, to an embodiment, the first guest system 24, in particular the application 42, is adapted to control a specific device of the control unit 1 or connected to the control unit 1, for example the external device 9. The application 42 is running in the lowest privilege level EL0. In an embodiment, the external device 9 is a lamp. The device may have a specific functionality and/or states. For example, a lamp may have several states: on, off, have a specific color or is blinking. The first guest system 24 does not have the right to access directly the hardware controller 7 to control the external device 9.

According to some embodiments, the first guest system 24, in particular the application 42, may desire to change a section in the memory or a controller, for example one or more registers, in order to control the device, for example the external device 9. For example, the memory is the data memory portion 36. For example, the first guest system issues for that purpose an access request for the resource, here the memory or data memory portion, to write the control command.

However, according to embodiments, the first guest system 24 is not allowed to access the resource.

The access request 38 is provided, according to embodiments, as an exception to the virtualization system 22. However, it may be for example alternatively a read, write, store or load instructions, a system call and the like.

The virtualization system 22, in box 102, intercepts the access request 38 and inhibits or does not allow to provide access to the requested resource or a portion of the requested resource, for example the data memory portion 32. Then, the virtualization system 22 provides the intercepted access request to the interpreter 28. As stated above, only a portion of a resource may be inhibited for first guest system 24. Thus, only the access requests to this portion of the resource are then provided to the interpreter 28. Access requests to other portions of the resource from the first guest system may pass through to the resource.

In box 104, the interpreter 28 loads byte code instructions, for example in form of a program 30. The loaded byte code instructions is selected depending on the intercepted access request. For example, for a first type of intercepted access request a first set of bytecode and/or script instructions is loaded, for example in form of a first program 30, and for a second type of intercepted access request a second set of byte code instructions is loaded, for example in form of a second program 30. According to embodiments, the first type of intercepted access request may concern and/or include an access request to a first resource, for example a first memory region or register, and the second type of intercepted access request may concern and/or include an access request to a second resource, for example a second memory region or register.

The interpreter 28 then executes the loaded bytecode and/or script instructions in an execution environment provided by the interpreter 28. The interpreter 28 as part of the virtualization system in a high privilege level EL2 has a more extensive access to the resources of the control unit 1. The bytecode and/or script instructions include instructions to access the resource to which the access request 38 was directed, in particular to write or store specific data into a portion of the resource, in particular the data memory portion 36. In case for example that an external device like a lamp should be controlled by the control commands, the bytecode and/or script instructions include instructions to write a coded instruction or configuration into the data memory portion 36, for example "0" for "Lamp off", "1" for "Lamp on", "2" for "Lamp blinking" etc. The loaded bytecode and/or script instructions include a logic to transform the intercepted access request 38 including the control command to a coded instruction or configuration, which can be interpreted by the second guest system 26, in particular the application 44 running in the second guest system 26. The second guest system 26 does and acts as an arbiter for the requests made by the first guest system 24.

Further, the bytecode and/or script instructions include instructions to the virtualization system 22 to generate an interrupt for the second guest system 26. Then, for example, the second guest system 26 is informed that it should read the data memory portions 36 and/or execute a particular application 44 that reads the data memory portion 36. For example, the interpreter 28 issues a request to the virtualization system 22 that the second guest system 26 should be executed and should read the respective data memory portion 36. For example, the virtualization system 22 may than inject an interrupt into the second guest system 26 for that purpose.

In box 106, the interpreter 28 informs (reference sign 40) the first guest system 24 that the request to access a resource has been executed, for example via the virtualization system 22. The virtualization system 22 may inform the first guest system 24 via an interrupt about this. Further, in box 106, the virtualization system 22 provides an interrupt to the second guest system 26 and executes or activates the second guest system 26.

In box 110, the application 44 reads, via the virtualization system 22, the data memory portion 36. Based on the read data, the application 44 executes a function for the device, for example, the external device 9, to which the second guest system 26 has access. In other words, the data, for example the coded instruction or configuration, in the data memory portion 36 of the shared memory space 32, codes a device specific functionality.

Above, the data memory portions 36 has been used as example. However, the method may also applied to other resources, for example the resources described herein.

According to the invention, the portions of the virtualization system 22, which are qualified for safety are reduced, as only the interpreter has to be qualified for safety and not the code interpreted by the interpreter 28. In other words, the amount of functionality in the trusted code base is reduced while allowing running functionality from within the privilege level of the trusted code base. Thus, semi-untrusted code is run inside a higher privileged environment in a very efficient and safe manner, as only a reduced instruction set is provided by the emulator and thus proving that the program executes in strictly bound time and strictly confined memory space.

The code to be interpreted by the interpreter 28 has not to be qualified for safety if it does not concern a guest system, which has to be qualified for safety. For example, in case the first guest system 24 has to be qualified for safety, the code to be interpreted by the interpreter 28 concerning the first guest system 24 has to be qualified for safety.

According to the invention, also the context switches are reduced.

Further, according to embodiments disclosed herein, only special purpose execution environment has to be implemented in the virtualization layer, for example the emulator, which makes it unnecessary to actually develop the additional functionality like device virtualization to the same quality levels as the hypervisor itself but only to the level required for the specific device.

In some examples of implementation, any feature of any embodiment described herein may be used in combination with any feature of any other embodiment described herein.

## Claims

1. Method for accessing a resource of a control unit comprising:
executing a virtualization system on at least one processor of the control unit, the virtualization system including an interpreter (28) for bytecode and/or a script, the virtualization system assigning processor time and memory space to at least one guest system;
executing a first guest system (24) running on the virtualization system;
emitting, by the first guest system (24), an access request (38) to access a resource (5, 7, 32) of the control unit to the virtualization system (22);
determining, by the virtualization system (22), that the access request is not allowable for the first guest system (24);
loading by the interpreter (28) bytecode instructions and/or script instructions based on the request of the first guest system (24); and
executing, by the interpreter (28), the loaded bytecode or script instructions to access the resource (5, 7, 32).

2. Method according to claim 1, wherein the virtualization system (22) is statically configured.

3. Method according to claim 1 or 2, wherein the resource of the control unit is the at least one processor (5), at least one memory (5), at least one hardware controller (7), at least one register of the at least one processor (5), at least one register of the at least one hardware controller (5) and/or one or more memories inside the at least one processor (5).

4. Method according to one of the preceding claims, wherein the access request a write instruction, a read instruction, a load instruction, a store instruction, a system call, and/or an instruction for the resource.

5. Method according to one of the preceding claims, wherein the loaded bytecode instructions and/or script instructions are selected depending on the access request (38).

6. Method according to one of the preceding claims, wherein the interpreter (28) has not a Turing complete instruction set.

7. Method according to one of the preceding claims, wherein the interpreter (28) has an instruction set, wherein the instruction set consists of arithmetic operations, load and store operations, signaling and conditional branch instructions.

8. Method according to one of the preceding claims, wherein the interpreter (28) has an instruction set, wherein the instruction set does not allow backward jumps, loops, and/or a recursive program flow.

9. Method according to one of the preceding claims, wherein the access request includes a control command to control a device, wherein the bytecode and/or script instructions include commands to access the resource based on the access request (38) of the first guest system (24), wherein, in particular, the bytecode and/or script instructions include code transforming the control commands from the first guest system (24) to a coded instruction or configuration for the device, and, in particular, to write or store the coded instruction or configuration into the resource.

10. Method according to claim 9, wherein the device (9) is a device of a vehicle, in particular an automotive vehicle, wherein the device is one or more illuminating devices like lamps, one or more motors, one or more locks, one or more relays, one or more windows and/or the like.

11. Method according to one of the claims 9 or 10, wherein the bytecode and/or script instructions include commands issues a request to the virtualization system (22) that a second guest system (26) should be executed and/or should read the coded instruction or configuration from the resource, wherein the second guest system (26) is adapted access the device (9) and/or a hardware controller (7) of the device, the method further comprising:
executing the second guest system (26) on the virtualization system (22), reading, by the second guest system, the coded instruction or the configuration of the device from the resource based on the obtained signal, and
processing, by the second guest system (26) the configuration of the device.

12. Method according to one of the preceding claims, wherein the bytecode and/or script instructions are loaded by the virtualization system (22) as part of the configuration of the virtualization system.

13. Method according to one of the preceding claims, wherein the interpreter (28) provides a virtual processor on which the byte code and/or script instructions are executed.

14. A computer program product comprising instructions which, when the program is executed by a processor, cause the processor to carry out the method of one of the preceding claims.

15. Control unit comprising
at least one processor connected to at least one memory;
a virtualization system (22) executing on the at least one processor of the control unit, the virtualization system including an interpreter (28) for bytecode and/or a script, the virtualization system assigning processor time and memory space to at least one guest system;
a first guest system (26) running on the virtualization system, wherein the first guest system is adapted to emit an access request to access a resource of the control unit to the virtualization system (22),
wherein the virtualization system (22) is adapted to determine that the access request is not allowable for the first guest system, wherein the interpreter (28) is adapted to load bytecode and/or script instructions based on the request of the first guest system (26) and to execute the loaded bytecode and/or script instructions.

16. Control unit according to claim 15, wherein the controller is adapted to perform the method according to any one of the claims 1 to 13.
